# EUROPÄISCHE PATENTSCHRIFT

(11) **EP 0 684 113 B1**
(45) Veröffentlichungstag und Bekanntmachung des Hinweises auf die Patenterteilung: **17.06.1998**
(21) Anmeldenummer: 95106091.2
(22) Anmeldetag: 24.04.1995
(51) Int. Cl.: B26D 1/20, B26D 1/157, B23D 19/02, B21F 11/00

(54) **Schneidvorrichtung mit einem scheibenförmigen Schneidelement**
Cutting device with a disc shaped cutting element
Dispositif de coupe ayant un élément de coupe en forme de disque

(30) Priorität: 25.05.1994 CH 1612/94
(43) Veröffentlichungstag der Anmeldung: 29.11.1995
(73) Patentinhaber: Ferag AG, CH-8340 Hinwil (CH)
(72) Erfinder: Infanger, Rudolf, CH-8340 Hinwil (CH)
(74) Vertreter: Patentanwälte Schaad, Balass, Menzl & Partner AG

(56) Entgegenhaltungen:
- EP-A- 0 186 300
- EP-A- 0 442 264
- WO-A-85/00774
- AT-B- 325 928
- CH-A- 317 438
- DE-A- 4 404 455
- DE-C- 657 187
- DE-U- 9 311 705
- FR-A- 2 179 244
- US-A- 1 813 340
- US-A- 3 358 536
- US-A- 5 241 887

## Beschreibung

Die Erfindung betrifft eine Schneidvorrichtung für langgestreckte Gegenstände, insbesondere für Draht, gemäss dem Oberbegriff des Anspruchs 1.

Bekannte Schneidvorrichtungen arbeiten in der Weise, daß das Schneidelement linear gegenüber dem Scherelemente hin- und herbewegt wird, wobei immer dann, wenn die Schneide des Schneidelements an der mit der Schneide zusammenwirkenden Kante des Scherelementes vorbeibewegt wird, ein Abschneiden des langgestreckten Gegenstands bzw. des Drahtes erfolgt.

Derartige Schneidvorrichtungen können beispielsweise verwendet werden, um einen kontinuierlich oder intermittierend von einer Vorratsrolle abgezogenen Draht in einzelne Drahtstücke zu zerschneiden. Ein mögliches Einsatzgebiet derartiger Schneidvorrichtungen sind Heftstationen, in denen beispielsweise mehrere Druckereiprodukte mittels einer Heftklammer zu einem Verbund zusammengefaßt werden. Der von einer Vorratsrolle abgezogene Draht wird in gleich lange Drahtstücke zerschnitten, welche in der Heftstation zu einer U-förmigen Heftklammer gebogen werden, woraufhin die miteinander zu verbindenden Produkte mittels der Heftklammer verheftet werden.

Nachteilig bei den bekannten Schneidvorrichtungen ist, daß sich aufgrund der raschen Abnutzung des Schneidelements keine hohen Standzeiten erreichen lassen, wobei zudem oftmals auch keine sehr hohe Schnittfolgefrequenz realisierbar ist.

Eine Schneidvorrichtung der gattungsbildenden Art zum Schneiden von Zigaretten auf einstellbare Längen, ist in der CH-Patentschrift Nr. 317 438 offenbart. Ein kreisscheibenförmiges Schneidelement sitzt drehfest auf einer Welle, die am radial aussenliegenden Ende eines Trägerelements frei drehbar gelagert ist. Das Trägerelement ist an einer Leitwelle angeordnet, die ihrerseits über ein Universalgelenk mit einer Antriebswelle verbunden ist. Beim Drehen des Trägerelements mittels der Antriebswelle läuft das Schneidelement und damit auch die Welle um die Antriebswelle mit radialem Abstand um. Die Welle ist über ein Zahnradgetriebe mit einem zur Antriebswelle koaxial angeordneten feststehenden Zahnkranz derart verbunden, dass sie beim Umlaufen um die Drehachse der Leitwelle um die eigene Achse rotiert. Durch das Verhältnis der Anzahl Zähne wird erreicht, dass das Schneidelement bei jedem Schnittvorgang um einen gewissen Betrag entweder mehr oder weniger gedreht hat als bei vorhergehenden. Eine gleichmässige Beanspruchung der Schneide auf dem ganzen Umfang wird dadurch angestrebt.

Eine Aufgabe der vorliegenden Erfindung besteht darin, eine Vorrichtung der eingangs genannten Art so auszubilden, dass hohe Standzeiten erreichbar werden, wobei insbesondere auch eine gegenüber den bekannten Vorrichtungen höhere Schnittfolgefrequenz möglich sein soll.

Diese Aufgabe wird erfindungsgemäss mit einer Schneideinrichtung, die die Merkmale im Anspruch 1 aufweist, gelöst.

Das erfindungsgemäss scheibenförmig ausgebildete Schneidelement weist an seinem Umfang mehrere Schneidbereiche auf, die in einer vorgegebenen oder einer zufälligen Reihenfolge am Scherelement vorbeibewegt werden, wodurch gewährleistet wird, dass nicht wie beim Stand der Technik immer mit demselben, schnell stumpf werdenden Schneidbereich geschnitten wird, sondern dass mehrere Schneidbereiche des Schneidelements abwechselnd zum Einsatz kommen.

Gegenüber dem Stand der Technik, bei dem bei allen aufeinanderfolgenden Schnitten ein und derselbe Schneidbereich zum Einsatz kommt, lässt sich so die Standzeit einer erfindungsgemässen Schneidvorrichtung erheblich erhöhen, da erfindungsgemäß eine Mehrzahl von Schneidbereichen bei aufeinanderfolgenden Schnitten nacheinander zum Einsatz kommen. Je mehr Schneidbereiche dabei am Schneidelement vorgesehen werden und zum Einsatz kommen, desto langsamer stumpfen die einzelnen Schneidbereiche ab und desto höher wird die erzielbare Standzeit der Vorrichtung.

Bevorzugt läßt sich eine erfindungsgemäße Schneidvorrichtung beispielsweise in einer Heftstation für Druckereiprodukte einsetzen, bei der in schneller Folge jeweils gleich lange Drahtstücke von einem auf einer Vorratsrolle gespeicherten Drahtvorrat abgeschnitten und anschließend zu Heftklammern verbogen werden. Es lassen sich jedoch auch beliebige andere Anwendungsfälle denken, in denen beispielsweise verschieden lange Drahtstücke mit zeitlich variabler Schnittfolge benötigt werden.

Bevorzugte Ausführungsformen der Erfindung werden im folgenden anhand der Zeichnung beispielhaft erläutert; es zeigt:
- Fig. 1: eine schematische Darstellung einer ersten Ausführungsform einer erfindungsgemäßen Schneidvorrichtung in einem ersten Betriebszustand,
- Fig. 2: eine Vorrichtung gemäß Fig. 1 in einem zweiten Betriebszustand,
- Fig. 3: einen Schnitt durch eine gemäß dem in den Fig. 1 und 2 dargestellten Prinzip arbeitenden Schneidvorrichtung,
- Fig. 4: eine schematische Darstellung einer zweiten Ausführungsform einer erfindungsgemäßen Schneidvorrichtung in einem ersten Betriebszustand, und
- Fig. 5: eine Vorrichtung gemäß Fig. 4 in einem zweiten Betriebszustand.

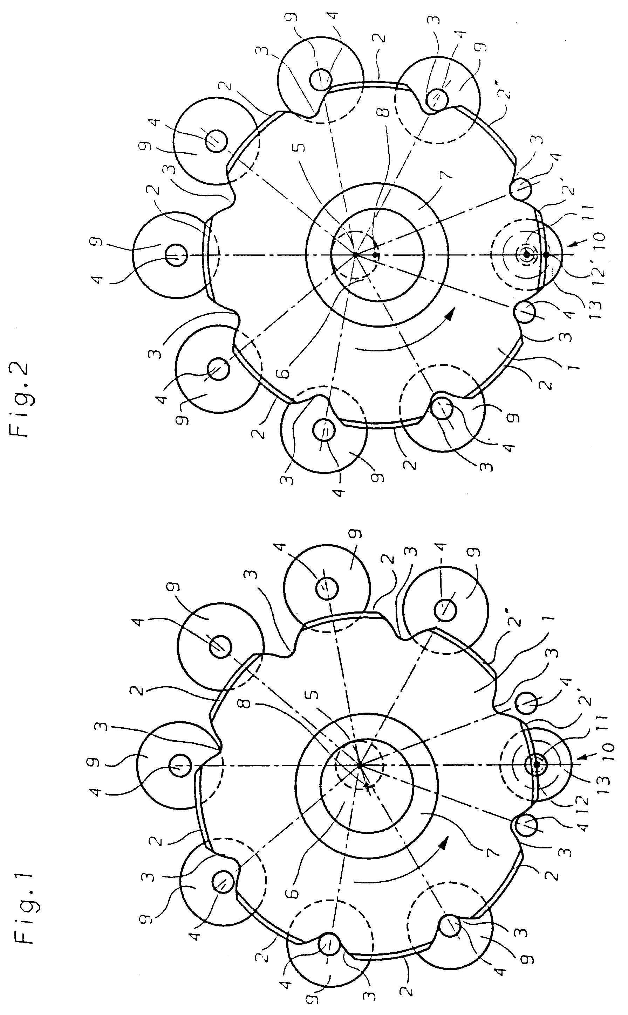

Fig. 1 zeigt ein als im wesentlichen kreisscheibenförmiges Messer ausgebildetes Schneidelement 1, welches mit acht gleichmäßig um seinen Außenumfang verteilt angeordneten Schneidenabschnitten 2, 2', 2'' versehen ist.

Zwischen jeweils zwei einander benachbarten Schneidenabschnitten 2, 2', 2'' ist jeweils eine sich radial nach innen erstreckende Ausnehmung 3 vorgesehen, welche jeweils im wesentlichen die einer Sinus-Halbwelle entsprechende Form aufweist.

Das mit acht Schneidenabschnitten 2, 2', 2'' und acht jeweils dazwischen angeordneten Ausnehmungen 3 versehene Schneidelement 1 ist innerhalb einer Anordnung von neun Zapfen 4 angeordnet, welche sich senkrecht zum Schneidelement 1 erstrecken. Die Zapfen 4 sind dabei auf einer Kreisbahn um einen Mittelpunkt 5 gleichmäßig verteilt angeordnet. Die Form der einzelnen Zapfen 4 ist so gewählt, daß sie mit den Ausnehmungen 3 in Eingriff bringbar sind.

In dem in Fig. 1 dargestellten Beispiel weisen die Zapfen 4 eine zylindrische Form auf.

Dar Abstand benachbarter Zapfen 4 entspricht dem Abstand benachbarter Ausnehmungen 3, so daß das Schneidelement 1 gegenüber den Zapfen 4 in eine solche Position bewegbar ist, in der zwei benachbarte zylindrische Zapfen 4 mit dem inneren Bereich ihrer Mantelfläche flächig an zwei benachbarten Ausnehmungen 3 anliegen.

Das kreisscheibenförmige Schneidelement 1 ist über zumindest ein Kugellager 7 mit einer senkrecht zum Schneidelement 1 verlaufenden Welle 6 gekoppelt. Die zentrale Längsachse der Welle 6 erstreckt sich dabei durch den Mittelpunkt 8 des kreisscheibenförmigen Schneidelements, wobei sich die exzentrische Drehachse der von einem nicht dargestellten Antrieb beaufschlagten Welle 6 durch den Mittelpunkt 5 der Kreislinie erstreckt, auf der die Zapfen 4 angeordnet sind.

Bei Beaufschlagung der Welle 6 beschreibt demzufolge der Mittelpunkt 8 des kreisscheibenförmigen Schneidelements 1 eine Kreisbahn um den Mittelpunkt 5 der Kreislinie, auf der die Zapfen 4 angeordnet sind. Der Radius dieser Kreisbahn entspricht dem Abstand der beiden Mittelpunkte 5 und 8.

Die Zapfen 4 ragen jeweils aus einem kreisscheibenförmigen Basisplättchen 9 hervor, deren Oberflächen parallel zum scheibenförmigen Schneidelement 1 verlaufen und eine Auflagefläche für die Unterseite des scheibenförmigen Schneidelements 1 bilden.

Zwischen zwei benachbarten Zapfen 4 ist ein Scherelement 10 angeordnet, das in dem in Fig. 1 dargestellten Beispiel durch den stirnseitigen Endbereich einer Öse 11 gebildet ist. Der abzuschneidende Draht 12 wird senkrecht zur Zeichenebene durch die Öse 11 transportiert, wobei der Innendurchmesser der Öse 11 geringfügig größer als der Außendurchmesser des durch die Öse 11 geführten Drahtes 12 ist.

Der stirnseitige Endbereich der Öse 11 ist durch ein Basisplättchen 13 gebildet, dessen Oberfläche in einer Ebene mit den Oberflächen der Basisplättchen 9 liegt.

Die Funktion der beschriebenen Vorrichtung wird nachstehend anhand der Fig. 1 und 2 erläutert, wobei Fig. 1 die Vorrichtung in einem ersten Betriebszustand und Fig. 2 dieselbe Vorrichtung in einem zweiten Betriebszustand zeigt.

Bei Beaufschlagung der exzentrisch angetriebenen Welle 6 beschreibt diese eine Drehung um eine durch den Mittelpunkt 5 der Kreislinie, auf der die Zapfen 4 angeordnet sind, verlaufende Achse, welche parallel beabstandet zur zentralen Längsachse der Welle 6 verläuft. Dementsprechend beschreibt auch der Mittelpunkt 8 des kreisscheibenförmigen Schneidelements 1 eine kreisförmige Umlaufbahn um den Mittelpunkt 5 der Kreislinie, auf der die Zapfen 4 angeordnet sind.

Durch das zwischen Welle 6 und Schneidelement 1 vorgesehene Kugellager 7 wird eine rotatorische Relativbewegung zwischen Welle 6 und Schneidelement 1 ermöglicht.

Die Summe aus dem Abstand der beiden Mittelpunkte 5 und 8 und dem Abstand des Mittelpunkts 8 des Schneidelements 1 von dem bezogen auf den Mittelpunkt 8 innersten Bereich der Ausnehmungen 3 ist gleich dem Abstand zwischen dem Mittelpunkt 5 und dem bezogen auf den Mittelpunkt 5 innersten Bereich der Zapfen 4. Auf diese Weise wird gewährleistet, daß bei Rotation der Welle 6 in Richtung des in Fig. 1 gezeigten Pfeiles immer zumindest eine Ausnehmung 3 mit einem Zapfen 4 in Eingriff steht. Bei dieser Rotation wird das Schneidelement 1 über seine Ausnehmungen 3 an den Zapfen 4 abgewälzt, wobei jeweils benachbarte Ausnehmungen 3 nacheinander mit jeweils benachbarten Zapfen 4 in Eingriff kommen.

Da insgesamt neun Zapfen 4, jedoch nur acht Ausnehmungen 3 vorgesehen sind, wird sichergestellt, daß die Ausnehmungen 3, nachdem sie mit einem Zapfen 4 in Eingriff gebracht wurden, als nächstes mit dem im Uhrzeigersinn benachbarten Zapfen 4 in Eingriff kommen. Auf diese Weise beschreiben die Ausnehmungen 3, bei Rotation der Welle 6, eine wellenförmige Umlaufbahn um den Mittelpunkt 5 der Kreislinie, auf der die Zapfen 4 angeordnet sind, im Uhrzeigersinn

Ebenso wie die Ausnehmungen 3 beschreiben auch die Schneidenabschnitte 2, 2', 2'' eine wellenförmige Umlaufbahn um den Mittelpunkt 5. So wird gewährleistet, daß bei aufeinanderfolgenden Umdrehungen der exzentrisch angetriebenen Welle 6 jeweils benachbarte Schneidenabschnitte 2, 2', 2'' über die Öse 11 bewegt werden und dort den Schneidvorgang bewirken.

Bei der in Fig. 1 dargestellten Betriebsposition der Vorrichtung befindet sich der Schneidenabschnitt 2' gerade über der Öffnung der Öse 11, was bedeutet, daß sich der Draht 12 gerade im Schneidprozeß befindet.

In Fig. 2 ist die Vorrichtung gemäß Fig. 1 in einer Betriebsposition dargestellt, in der die Welle 6 gegenüber der Fig. 1 ungefähr um einen Winkel von 70° im Gegenuhrzeigersinn verdreht wurde.

In Fig. 2 befindet sich die exzentrisch angetriebene Welle 6 in der Position, in der sie in minimalem Abstand zur Öse 11 zu liegen kommt. In dieser Position ist das Drahtstück 12' bereits vollständig abgeschnitten, da der Schneidenabschnitt 2' über die Öffnung der Öse 11 hinwegbewegt wurde.

Bei einer Rotation der Welle 6 um 360° gegenüber der in Fig. 2 dargestellten Betriebsposition kommen sämtliche Ausnehmungen 3 jeweils mit einem Zapfen 4 genau einmal in Eingriff, woraufhin sich der Schneidenabschnitt 2'' in derjenigen Position befindet, in der sich bei der Darstellung gemäß Fig. 2 der Schneidenabschnitt 2' befindet.

Durch das beschriebene Funktionsprinzip wird es möglich, daß bei jeder Umdrehung der Welle 6 um den Mittelpunkt 5 jeweils ein Schnitt ausgeführt wird, wobei bei aufeinanderfolgenden Schnitten jeweils im Uhrzeigersinn einander benachbarte Schneidenabschnitte 2, 2', 2'' den Schneidvorgang bewirken.

Für das beschriebene Funktionsprinzip ist es nicht zwingend erforderlich, daß die Anzahl der Zapfen 4 genau um eins höher als die Anzahl der Ausnehmungen 3 gewählt wird. Es muß lediglich gewährleistet sein, daß die Anzahl der Zapfen größer ist als die Anzahl der Ausnehmungen 3, wobei jedoch nur dann sichergestellt ist, daß alle zwischen den Ausnehmungen 3 liegenden Schneidenabschnitte 2 zum Schneiden herangezogen werden, wenn entweder die Anzahl der Zapfen 4 gerade und die Anzahl der Ausnehmungen 3 ungerade oder wenn die Anzahl der Zapfen 4 ungerade und die Anzahl der Ausnehmungen 3 gerade ist.

Ein wesentlicher Vorteil der Vorrichtung gemäß den Fig. 1 und 2 ist darin zu sehen, daß Schnitte mit einer sehr hohen Schnittfolgefrequenz ausgeführt werden können, da die rotatorische Wellenbewegung der Schneidenabschnitte 2 einfacher und schneller zu bewerkstelligen ist, als eine Hin- und Herbewegung eines Schneidelements gemäß dem Stand der Technik.

Ein weiterer Vorteil der in den Fig. 1 und 2 dargestellten Vorrichtung ist darin zu sehen, daß die Schneidenabschnitte 2 nicht linear über das Scherelement 10 hinwegbewegt werden, sondern daß durch die rotatorische Wellenbewegung ein ziehender Schnitt erfolgt, welcher eine geringere Belastung der Schneide und eine bessere Qualität des Schnittes bedingt.

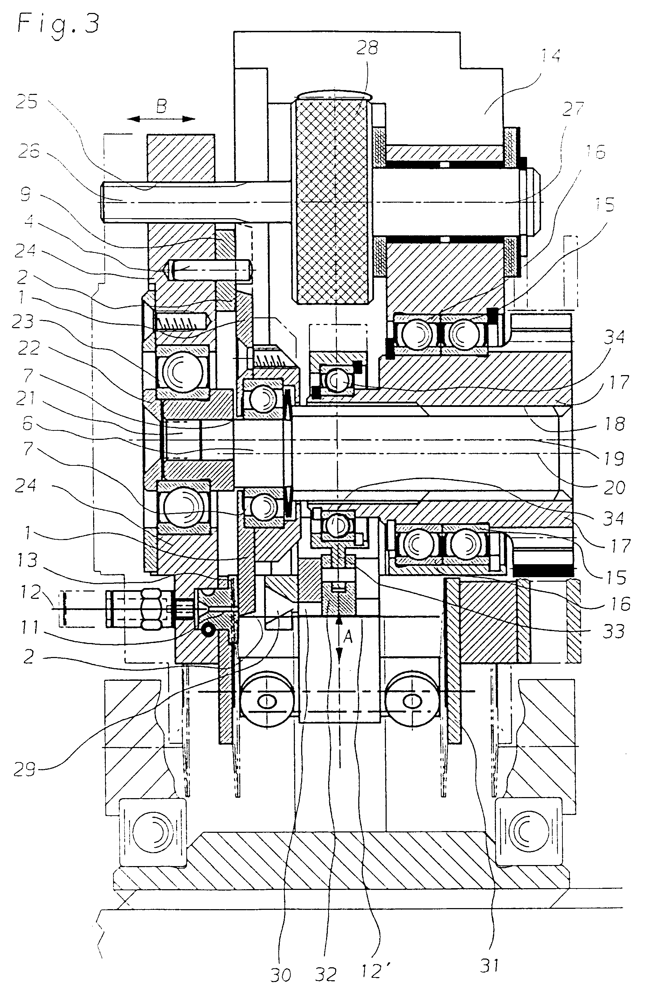

Fig. 3 zeigt einen Schnitt durch eine erfindungsgemäße Schneidvorrichtung, welche nach dem in den Fig. 1 und 2 dargestellten Prinzip arbeitet.

Aus Gründen der Übersichtlichkeit wurden diejenigen Bauelemente der Fig. 3, die eine Entsprechung in Bauelementen der Fig. 1 und 2 haben, mit den bereits in den Fig. 1 und 2 verwendeten Bezugszeichen versehen.

In einem Gehäuse 14 ist über zwei axial miteinander verspannte Kugellager 15, 16 eine im wesentlichen zylindrische Hülse 17 gelagert, welche eine exzentrische Bohrung 18 aufweist, in der die Welle 6 axial verschiebbar gehalten ist.

Die Drehachse der Hülse 17 ist mit dem Bezugszeichen 19 bezeichnet, während die zentrale Längsachse der Welle 6 das Bezugszeichen 20 trägt. Mit Bezugnahme auf die Fig. 1 und 2 ist festzustellen, daß sich die Drehachse 19 der Hülse 17 durch den Mittelpunkt 5 und die zentrale Längsachse 20 der Welle 6 durch den Mittelpunkt 8 erstreckt.

In dem den Kugellagern 15, 16 abgewandten Bereich der Welle 6 ist diese nicht mehr von der Hülse 17 umgeben. In diesem Bereich ist die Welle 6 mit dem Innenring des Kugellagers 7 verbunden, an dessen Außenring das im wesentlichen kreisscheibenförmige Schneidelement 1 fest angebracht ist.

Das Schneidelement 1 kann somit frei um die zentrale Längsachse 20 der Welle 6 rotieren.

An seinem Umfang ist das Schneidelement 1 mit Schneidenabschnitten 2 versehen.

Die Welle 6 besitzt einen zylindrischen Fortsatz 21 auf der der Hülse 17 abgewandten Seite des Kugellagers 7, wobei dieser Fortsatz 21 einen geringeren Durchmesser aufweist als die Welle 6 und in der Weise mit der Welle 6 verbunden ist, daß seine Mittelachse mit der Drehachse 19 der Hülse 17 zusammenfällt. Der zylindrische Fortsatz 21 ist fest in einer Hülse 22 aufgenommen, welche über ein Kugellager 23 drehbar in einem Halteelement 24 gelagert ist. Die Kugellager 15, 16, 23 sind dabei konzentrisch zueinander angeordnet.

Das Halteelement 24 ist gegenüber dem Gehäuse 14 entlang der Achsen 19, 20 gleitverschieblich gelagert. Zu diesem Zweck weist das Halteelement 24 eine Gewindebohrung 25 auf, in der ein Gewindebolzen 26 aufgenommen ist, dessen Achse 27 parallel zu den Achsen 19, 20 verläuft und der um seine Achse 27 drehbar im Gehäuse 14 gelagert und mit einem Rändelrad 28 versehen ist.

In das Halteelement 24 sind auf der dem Schneidelement 1 zugewandten Seite die sich senkrecht zum scheibenförmigen Schneidelement 1 erstreckendenZapfen 4 eingelassen, die die bezüglich der Fig. 1 und 2 beschriebene Funktion erfüllen. Aufgrund der in Fig. 3 gewählten Schnittdarstellung ist von den auf einer Kreisbahn angeordneten Zapfen 4 lediglich einer zu sehen.

Am Halteelement 24 ist ein den Zapfen 4 umgebendes hohlzylindrisches Basisplättchen 9 vorgesehen, dessen dem Halteelement 24 abgewandte Oberfläche eine Auflagefläche für die dem Halteelement 24 zugewandte Oberfläche des Schneidelements 1 bildet.

Im Halteelement 24 ist weiterhin die Öse 11 vorgesehen, durch welche der Draht 12 in Richtung der dem Schneidelement 1 zugewandten Seite des Halteelements 24 gefördert wird. Die Öse 11 weist dabei ein Basisplättchen 13 auf, dessen dem Halteelement 24 abgewandte Oberfläche in einer Ebene mit der entsprechenden Oberfläche des Basisplättchens 9 liegt. Die Oberflächen der Basisplättchen 9 und des Basisplättchens 13 bilden somit eine Auflagefläche, über die das Schneidelement 1 in der bezüglich der Fig. 1 und 2 beschriebenen rotatorischen Wellenbewegung gleiten kann.

Auf der der Öse 11 abgewandten Seite des Schneidelements 1 befindet sich ein koaxial mit der Öse 11 ausgerichtetes trichterförmiges Führungselement 29, welches dafür sorgt, daß der durch die Öse 11 transportierte Draht 12 in eine Führungsnut 30 gelangt, die sich senkrecht zum scheibenförmigen Schneidelement 1 erstreckt.

An dem der Öse 11 abgewandten Ende der Führungsnut 30 ist ein Anschlagelement 31 für das Ende des abzuschneidenden Drahtes vorgesehen.

Weiterhin weist die in Fig. 3 dargestellte Vorrichtung einen entlang des Doppelpfeiles A beweglichen Auswerferstempel 32 auf, der dazu dient, ein abgeschnittenes Drahtstück aus der Führungsnut 30 herauszubewegen. Der Auswerferstempel 32 ist dabei von einem Antriebselement 33 beaufschlagt, welches wiederum über ein Kugellager 34 mit der exzentrisch angetriebenen Welle 6 in Verbindung steht.

Vor Inbetriebnahme der Schneidvorrichtung gemäß Fig. 3 wird über das Rändelrad 28 die gewünschte Drahtstücklänge eingestellt, indem das Halteelement 24 entlang des Doppelpfeiles B gegenüber dem Anschlagelement 31 verfahren wird, bis der Abstand zwischen dem Anschlagelement 31 und der dem Anschlagelement 31 zugewandten Oberfläche des die Öse 11 umgebenden Basisplättchens 13 der gewünschten Drahtstücklänge entspricht; das Halteelement 24 und das Anschlagelement 31 werden symmetrisch zu einer Mittelebene in entgegengesetzten Richtungen verschoben. Dabei werden gemeinsam mit dem Halteelement 24 auch das Schneidelement 1, die Öse 11, die Zapfen 4 sowie die Welle 6 gegenüber dem stationären Gehäuse 14 verschoben. Die Position der fest mit dem Halteelement 24 verbundenen Teile bei Einstellung der größtmöglichen Drahtstücklänge ist in Fig. 3 strichpunktiert eingezeichnet.

Beim Betrieb der Vorrichtung gemäß Fig. 3 wird der Draht 12 von einer in Fig. 3 nicht dargestellten Vorschubeinrichtung kontinuierlich oder intermittierend durch die Öse 11 in Richtung des Anschlagelements 31 transportiert.

Das Schneidelement 1 führt die bezüglich der Fig. 1 und 2 erläuterte rotatorische Wellenbewegung aus, wodurch ziehende Schnitte in schneller Abfolge bei Verwendung unterschiedlicher Schneidenbereiche des Schneidelements 1 ermöglicht werden.

Pro Umdrehung der Welle 6 um die Drehachse 19 der Hülse 17 wird ein Schnitt ausgeführt. Synchron zu dieser Schneidbewegung erfolgt eine Auf- und Abbewegung des ebenfalls mit der Welle 6 gekoppelten Antriebselements 33, so daß letztendlich eine synchronisierte Bewegung zwischen Schneidelement 1 und Auswerferstempel 32 erzeugt wird. Auf diese Weise wird jedes abgeschnittene Drahtstück 12' bereits während des Schneidvorgangs aus der Führungsnut 30 herausbewegt, um beispielsweise einem Drahtstückübernahmerad übergeben zu werden, welches für den kontinuierlichen Abtransport der einzeln nacheinander abgeschnittenen Drahtstücke sorgt.

Die in Fig. 3 dargestellte Schneidvorrichtung kann in der Weise mit einem Drahtstückübernahmerad bzw. mit einer Heftstation gekoppelt werden, daß sie von dieser auf einfache Weise weggeschwenkt werden kann, um so ohne große Mühen Reparaturen oder Einstellarbeiten ausführen zu können.

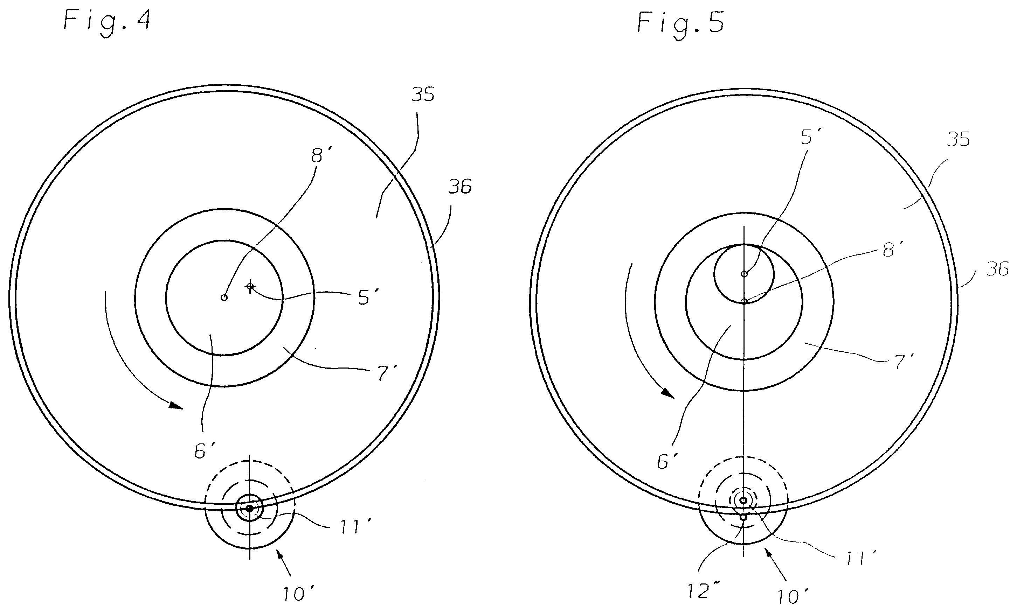

Die Fig. 4 und 5 zeigen entsprechend den Fig. 1 und 2 zwei unterschiedliche Betriebspositionen einer alternativen Ausführungsform einer erfindungsgemäßen Schneidvorrichtung.

Das Schneidelement 35 ist dabei als kreisscheibenförmiges Messer mit einer sich durchgehend entlang dessen Außenumfang erstreckenden Schneide 36 ausgebildet.

Analog zu den Fig. 1 und 2 ist das Schneidelement 35 über ein Kugellager 7' mit einer Welle 6' verbunden, die sich senkrecht zum kreisscheibenförmigen Schneidelement 35 erstreckt, wobei ihre zentrale Längsachse durch den Mittelpunkt 8' des kreisscheibenförmigen Schneidelements 35 verläuft. Die Welle 6' ist dabei ebenfalls von einem exzentrischen Antrieb beaufschlagt, welcher für eine Drehung der Welle 6' um eine von ihrer zentralen Längsachse parallel beabstandete und durch den Punkt 5' verlaufende Achse sorgt.

Weiterhin ist ebenfalls entsprechend zu den Fig. 1 und 2 ein aus einer Öse 11' bestehendes Scherelement 10' vorgesehen, welches so angeordnet ist, daß der stirnseitige Endbereich der Öse 11', durch welchen der abzuschneidende Draht verläuft, bei Rotation der Welle 6' von der entlang des Umfangs des Schneidelements 35 angeordneten Schneide 36 überfahren wird.

Fig. 4 stellt eine Betriebsposition dar, bei der gerade ein Schneidvorgang ausgelöst wird, während der Schneidvorgang bei der Betriebsposition gemäß Fig. 5 bereits abgeschlossen ist, was an dem gegenüber der Öse 11' verschobenen Drahtstück 12'' erkennbar ist. Zwischen den beiden in den Fig. 4 und 5 dargestellten Betriebspositionen hat eine Rotation der Welle 6' um ungefähr 70° stattgefunden.

Beim Betrieb der Vorrichtung gemäß den Fig. 4 und 5 ist das Schneidelement 35 frei um die Welle 6' drehbar, was dazu führt, daß unterschiedliche Bereiche der Schneide 36 statistisch verteilt zum Einsatz kommen, wobei eine rotatorische Relativbewegung zwischen Welle 6' und Schneidelement 35 ausschließlich aufgrund von Reibungskräften entsteht. Entsprechende Reibungskräfte treten beispielsweise im Kugellager 7', durch den Schneidvorgang selbst oder durch die Luftreibung des Schneidelements 35 auf.

Falls für eine definierte, nicht zufällige Abfolge des Einsatzes unterschiedlicher Bereiche der Schneide 36 gesorgt werden soll, kann das Schneidelement 35 mit einem konzentrisch zu diesem angeordneten Zahnrad gekoppelt werden, welches sich beim Betrieb der Vorrichtung ständig im Eingriff mit einem Innenzahnkranz befindet, dessen Innendurchmesser größer als der Außendurchmesser des Zahnrades ist. In diesem Fall wälzt sich das mit dem Schneidelement gekoppelte Zahnrad an dem erwähnten Innenzahnkranz ab, wobei zum einen der Punkt 8' eine kreisförmige Umlaufbahn um den Punkt 5' beschreibt und zum anderen durch den Eingriff von Zahnrad und Zahnkranz für eine definierte Relativbewegung zwischen der Welle 6' und dem Schneidelement 35 gesorgt wird.

Es lassen sich im Zusammenhang mit der Erfindung eine beliebige Anzahl von alternativen Antriebsmechanismen denken, solange gewährleisten ist, daß bei der Ausführung von aufeinanderfolgenden Schnitten verschiedene Abschnitte der Schneide zum Einsatz kommen.

## Patentansprüche

1. Schneidvorrichtung für langgestreckte Gegenstände, insbesondere für Draht (12, 12', 12''), mit einem im wesentlichen kreisscheibenförmigen Schneidelement (1, 35), dessen Umfang zumindest abschnittsweise als Schneide (2, 2', 2'', 36) ausgebildet ist, und einer sich zentral und senkrecht zum Schneidelement (1, 35) erstreckenden Welle (6, 6'), an der das Schneidelement (1, 35) angeordnet ist und die mittels eines Antriebs, zum Bewegen des Schneidelements (1, 35) relativ zu einem Scherelement (10, 10'), in der Weise gekoppelt ist, dass die Längsachse (20) der Welle (6, 6') um eine Drehachse (19) umläuft und dass jeweils ein einziger Abschnitt der Schneide (2, 2', 2'', 36) zur Ausführung eines Schnittes am Scherelement (10, 10') vorbeibewegt wird und verschiedenen Abschnitte der Schneide (2, 2', 2'', 36) zur Ausführung aufeinanderfolgender Schnitte nacheinander am Scherelement (10, 10') vorbeibewegt werden, dadurch gekennzeichnet, dass die Welle (6, 6') exzentrisch angetrieben und das Schneidelement (1, 35) drehbar an der Welle (6, 6') gelagert ist.

2. Schneidvorrichtung nach Anspruch 1, dadurch gekennzeichnet, daß das Schneidelement (1) als im wesentlichen kreisscheibenförmiges Messer mit einer Anzahl n von gleichmäßig um dessen Außenumfang verteilt angeordneten Schneidenabschnitten (2, 2', 2'') ausgebildet ist, zwischen den Schneidenabschnitten (2, 2', 2'') sich radial nach innen erstreckende Ausnehmungen (3) aufweist und innerhalb von mindestens n+1 auf einer Kreisbahn gleichmäßig verteilten, sich senkrecht zum Schneidelement (1) erstreckenden und mit den Ausnehmungen (3) in Eingriff bringbaren Zapfen (4) angeordnet ist, wobei der Abstand benachbarter Ausnehmungen (3) des Schneidelements (1) dem Abstand benachbarter Zapfen (4) entspricht.

3. Schneidvorrichtung nach Anspruch 2, dadurch gekennzeichnet, dass das Schneidelement drehbar um die sich durch das Schneidlement erstreckende Welle (6) gelagert ist.

4. Schneidvorrichtung nach Anspruch 2 oder 3, dadurch gekennzeichnet, daß das Scherelement (10) im wesentlichen zwischen zwei benachbarten Zapfen (4) angeordnet ist.

5. Schneidvorrichtung nach Anspruch 1, dadurch gekennzeichnet, daß das Schneidelement (35) als kreisscheibenförmiges Messer mit einer sich durchgehend entlang dessen Außenumfang erstreckenden Schneide (36) ausgebildet ist und das Schneidelement (35) sich aufgrund von Reibungskräften rotatorisch relativ zur Welle (6') bewegt.

6. Schneidvorrichtung nach Anspruch 5, dadurch gekennzeichnet, daß das Schneidelement (35) drehbar um die sich durch das Schneidelement (35) erstreckende angetriebene Welle (6') gelagert ist.

7. Schneidvorrichtung nach Anspruch 6, dadurch gekennzeichnet, daß das Schneidelement als kreisscheibenförmiges Messer mit einer sich durchgehend entlang dessen Außenumfang erstreckenden Schneide (36) ausgebildet und mit einem konzentrisch zu diesem angeordneten Zahnrad gekoppelt ist, welches sich beim Betrieb der Vorrichtung ständig im Eingriff mit einem Innenzahnkranz befindet, dessen Innendurchmesser größer als der Außendurchmesser des Zahnrades ist.

8. Schneidvorrichtung nach einem der Ansprüche 1 bis 7, dadurch gekennzeichnet, daß das Scherelement (10, 10') durch den stirnseitigen Endbereich einer Öse (11, 11') gebildet ist, deren Innenabmessungen geringfügig größer als der Querschnitt des langgestreckten Gegenstandes (12, 12', 12'') sind.

9. Schneidvorrichtung nach einem der Ansprüche 1 bis 8, dadurch gekennzeichnet, daß in Vorschubrichtung des zu schneidenden Gegenstandes (12, 12', 12'') zur Schneidebene versetzt ein Anschlagelement (31) vorgesehen ist.

10. Schneidvorrichtung nach Anspruch 9, dadurch gekennzeichnet, daß der Abstand zwischen Schneidebene und Anschlagelement (31) einstellbar ist.

11. Schneidvorrichtung nach einem der Ansprüche 1 bis 10, dadurch gekennzeichnet, daß auf der in Vorschubrichtung des zu schneidenden Gegenstandes (12, 12', 12'') gelegenen Seite des Schneidelements (1, 35) eine sich senkrecht zum scheibenförmigen Schneidelement (1, 35) erstreckende Führungsnut (30) für den zu schneidenden Gegenstand (12, 12', 12'') vorgesehen ist.

12. Schneidvorrichtung nach Anspruch 11, dadurch gekennzeichnet, daß ein Auswerferstempel (32) zum Herausbewegen eines abgeschnittenen langgestreckten Gegenstandes (12, 12', 12'') aus der Führungsnut (30) vorgesehen ist.

13. Schneidvorrichtung nach Anspruch 12, dadurch gekennzeichnet, daß der Auswerferstempel (32) von der exzentrisch angetriebenen Welle (6, 6') synchron zur Bewegung des Schneidelements (1, 35) beaufschlagt ist.

14. Schneidvorrichtung nach einem der Ansprüche 1 bis 13, dadurch gekennzeichnet, daß die exzentrisch angetriebenen Welle (6, 6') gemäß den Ansprüchen 3 oder 6 beiderseits des Schneidelements (1, 35) gelagert ist.

15. Schneidvorrichtung nach einem der Ansprüche 1 bis 14, dadurch gekennzeichnet, daß eine kontinuierlich oder intermittierend angetriebene Vorschubeinrichtung für den langgestreckten Gegenstand (12, 12', 12'') vorgesehen ist.

16. Schneidvorrichtung nach einem der Ansprüche 1 bis 15, dadurch gekennzeichnet, daß eine insbesondere als Drahtstückübernahmerad ausgebildete Vorrichtung zum kontinuierlichen Abtransport der einzeln nacheinander abgeschnittenen Gegenstände (12', 12'') vorgesehen ist.

## Claims

1. Cutting device for elongate items, in particular for wire (12, 12', 12''), with a substantially circular-disc-shaped cutting element (1, 35) the circumference of which is designed at least in certain portions as a cutting blade (2, 2', 2'', 36), and with a shaft (6, 6') which extends centrally and perpendicularly with respect to the cutting element (1, 35), on which the cutting element (1, 35) is arranged and which is coupled by means of a drive, for moving the cutting element (1, 35) in relation to a shearing element (10, 10') in such a way that the longitudinal axis (20) of the shaft (6, 6') revolves about an axis of rotation (19) and that in each case a single portion of the cutting blade (2, 2', 2'', 36) is moved past the shearing element (10, 10') to perform one cut and different portions of the cutting blade (2, 2', 2'', 36) are moved one after the other past the shearing element (10, 10') to perform successive cuts, characterized in that the shaft (6, 6') is driven eccentrically and the cutting element (1, 35) is mounted rotatably on the shaft (6, 6').

2. Cutting device according to Claim 1, characterized in that the cutting element (1) is designed as a substantially circular-disc-shaped cutter with a number n of blade portions (2, 2', 2'') arranged evenly distributed around its outer circumference, has recesses (3) extending radially inwards between the blade portions, (2, 2', 2'') and is arranged inside at least n+1 pins (4) which are evenly distributed on a circular path, extend perpendicularly with respect to the cutting element (1), and can be brought into engagement with the recesses (3), the spacing between neighbouring recesses (3) of the cutting element (1) corresponding to the spacing between neighbouring pins (4).

3. Cutting device according to Claim 2, characterized in that the cutting element is mounted rotatably about the shaft (6) which extends through the cutting element.

4. Cutting device according to Claim 2 or 3, characterized in that the shearing element (10) is arranged substantially between two neighbouring pins (4).

5. Cutting device according to Claim 1, characterized in that the cutting element (35) is designed as a circular-disc-shaped cutter with a cutting blade (36) extending along its entire outer circumference and the cutting element (35) moves rotationally in relation to the shaft (6') on account of frictional forces.

6. Cutting device according to Claim 5, characterized in that the cutting element (35) is mounted rotatably about the driven shaft (6') which extends through the cutting element (35).

7. Cutting device according to Claim 6, characterized in that the cutting element is designed as a circular-disc-shaped cutter with a cutting blade (36) extending along its entire outer circumference and is coupled to a gear wheel which is arranged concentrically with respect to it and, during operation of the device, is constantly in engagement with an internally toothed wheel rim, the inside diameter of which is greater than the outside diameter of the gear wheel.

8. Cutting device according to one of Claims 1 to 7, characterized in that the shearing element (10, 10') is formed by the end-face region of an eyelet (11, 11') the inside dimensions of which are slightly greater than the cross-section of the elongate item (12, 12', 12'').

9. Cutting device according to one of Claims 1 to 8, characterized in that a stop element (31) is provided, in the advancing direction of the item (12, 12', 12'') to be cut, offset with respect to the cutting plane.

10. Cutting device according to Claim 9, characterized in that the distance between the cutting plane and the stop element (31) is adjustable.

11. Cutting device according to one of Claims 1 to 10, characterized in that on the side of the cutting element (1, 35) situated in the advancing direction of the item (12, 12', 12'') to be cut there is provided a guiding groove (30) for the item (12, 12', 12'') to be cut, which groove extends perpendicularly with respect to the disc-shaped cutting element (1, 35).

12. Cutting device according to Claim 11, characterized in that an ejector rod (32) is provided for moving a cut-off elongate item (12, 12', 12'') out of the guiding groove (30).

13. Cutting device according to Claim 12, characterized in that the ejector rod (32) is acted upon by the eccentrically driven shaft (6, 6') synchronously with respect to the movement of the cutting element (1, 35).

14. Cutting device according to one of Claims 1 to 13, characterized in that the eccentrically driven shaft (6, 6') according to Claims 3 or 6 is mounted on both sides of the cutting element (1, 35).

15. Cutting device according to one of Claims 1 to 14, characterized in that a continuously or intermittently driven advancing means is provided for the elongate item (12, 12', 12'').

16. Cutting device according to one of Claims 1 to 15, characterized in that a device, designed in particular as a piece-of-wire take-over wheel, is provided for continuously transporting away the items (12', 12'') individually cut-off one after the other.

## Revendications

1. Dispositif de coupe pour des objets allongés, en particulier pour un fil (12, 12', 12''), ayant un élément de coupe (1, 35) essentiellement en forme de disque circulaire, dont le pourtour, au moins sur une section, est constitué par une arête de coupe (2, 2', 2'', 36), et ayant un arbre (6, 6') s'étendant centralment et perpendiculairement à l'élément de coupe (1, 35), sur lequel il est disposé et qui est couplé au moyen d'un entraînement, pour déplacer cet élément de coupe (1, 35) par rapport à un élément de cisaillement (10, 10') de telle manière que l'axe longitudinal (20) de l'arbre (6, 6') tourne autour d'un axe de rotation (19) et qu'une section unique de l'arête de coupe (2, 2', 2'', 36) soit à chaque fois avancée pour réaliser une découpe au niveau de l'élément de cisaillement (10, 10') et que d'autres sections de l'arête de coupe (2, 2', 2'', 36) soient avancées pour réaliser des découpes successives l'une après l'autre, caractérisé en ce que l'arbre (6, 6') est entraîné de manière excentrée et que l'élément de coupe (1, 35) est monté à rotation sur cet arbre (6, 6').

2. Dispositif de coupe selon la revendication 1, caractérisé en ce que l'élément de coupe (1) est constitué par un couteau essentiellement en forme de disque circulaire avec un nombre n de sections de coupe (2, 2', 2'') réparties régulièrement sur son pourtour, en ce qu'il présente, entre les sections de coupe (2, 2', 2''), des creux (3) s'étendant radialement vers l'intérieur, et en ce qu'il est disposé à l'intérieur d'un cercle constitué d'au moins n+1 tourillons (4) répartis uniformément, s'étendant perpendiculairement à l'élément de coupe (1) et pouvant venir en prise avec les creux (3), l'écart entre les creux (3) adjacents de l'élément de coupe (1) correspondant à l'écart entre les tourillons (4) consécutifs.

3. Dispositif de coupe selon la revendication 2, caractérisé en ce que l'élément de coupe est monté à rotation autour de l'arbre (6) s'étendant à travers lui.

4. Dispositif de coupe selon la revendication 2 ou 3, caractérisé en ce que l'élément de cisaillement (10) est disposé essentiellement entre deux tourillons (4) consécutifs.

5. Dispositif de coupe selon la revendication 1, caractérisé en ce que l'élément de coupe (35) est constitué par un couteau en forme de disque circulaire ayant une arête de coupe (36) s'étendant de manière continue sur tout son pourtour extérieur, et en ce qu'il se déplace en rotation par rapport à l'arbre (6') sous l'effet des forces de frottement.

6. Dispositif de coupe selon la revendication 5, caractérisé en ce que l'élément de coupe (35) est monté à rotation autour de l'arbre (6') entraîné, s'étendant à travers lui.

7. Dispositif de coupe selon la revendication 6, caractérisé en ce que l'élément de coupe est constitué par un couteau en forme de disque circulaire ayant une arête de coupe (36) s'étendant de manière continue sur tout son pourtour extérieur et est couplé à une roue dentée concentrique à celui-ci, qui, lors du fonctionnement du dispositif, se trouve constamment en prise avec une couronne dentée interne, dont le diamètre intérieur est supérieur au diamètre extérieur de la roue dentée.

8. Dispositif de coupe selon l'une quelconque des revendications 1 à 7, caractérisé en ce que l'élément de cisaillement (10, 10') est formé par la zone d'extrémité de la face d'attaque d'un oeillet (11, 11') dont les dimensions internes sont légèrement plus grandes que la section transversale de l'objet allongé (12, 12', 12'').

9. Dispositif de coupe selon l'une quelconque des revendications 1 à 8, caractérisé en ce que dans la direction d'avance de l'objet allongé (12, 12', 12''), est prévu un élément de butée (31) décalé par rapport au plan de coupe.

10. Dispositif de coupe selon la revendication 9, caractérisé en ce que l'écart entre le plan de coupe et l'élément de butée (31) est réglable.

11. Dispositif de coupe selon l'une quelconque des revendications 1 à 10, caractérisé en ce qu'est prévue, sur le côté de l'élément de coupe (1, 35) tourné dans la direction d'avance de l'objet allongé (12, 12', 12''), une rainure de guidage (30) pour cet objet, s'étendant perpendiculairement à l'élément de coupe (1, 35) en forme de disque.

12. Dispositif de coupe selon la revendication 11, caractérisé en ce qu'un poinçon d'éjection (32) est prévu pour faire sortir un objet allongé (12, 12', 12'') coupé de la rainure de guidage (30).

13. Dispositif de coupe selon la revendication 12, caractérisé en ce que le poinçon d'éjection (32) est sollicité par l'arbre (6, 6') entraîné de manière excentrique en synchronisme avec le mouvement de l'élément de coupe (1, 35).

14. Dispositif de coupe selon l'une quelconque des revendications 1 à 13, caractérisé en ce que l'arbre (6, 6') entraîné de manière excentrique selon les revendications 3 ou 6, est monté de part et d'autre de l'élément de coupe (1, 35).

15. Dispositif de coupe selon l'une quelconque des revendications 1 à 14, caractérisé en ce qu'est prévu un mécanisme d'avance entraîné en continu ou de manière intermittente pour l'objet allongé (12, 12', 12'').

16. Dispositif de coupe selon l'une quelconque des revendications 1 à 15, caractérisé en ce qu'un mécanisme constitué en particulier d'une roue de réception d'un morceau de fil, est prévue pour le transport en continu des objets coupés (12', 12'') individuellement, l'un après l'autre.
